# FASCICULE DE BREVET EUROPEEN

(11) **EP 0 616 844 B1**
(45) Date de publication et mention de la délivrance du brevet: **27.08.1997**
(21) Numéro de dépôt: 94400589.1
(22) Date de dépôt: 17.03.1994
(51) Int. Cl.: B01J 20/20, B01J 37/02, C09K 5/00, B01J 20/32

(54) **Procédé de réalisation d'un composite actif et composite ainsi obtenu**
Verfahren zur Herstellung einer aktiven Zusammensetzung und damit hergestellte Zusammensetzung
Process for the realisation of an active composite und composite obtained thereof

(30) Priorité: 18.03.1993 FR 9303145
(43) Date de publication de la demande: 28.09.1994
(73) Titulaire: ELF AQUITAINE, 92400 Courbevoie (FR)
(72) Inventeur: Prosdocimi, Jacques, F-66680 Canohes (FR); Timoney, Charles, F-78620 L'Etang la Ville (FR)
(74) Mandataire: Timoney, Ian Charles Craig

(56) Documents cités:
- EP-A- 0 198 186
- WO-A-91/15292
- CH-A- 679 394
- FR-A- 2 284 371
- GB-A- 1 194 766

## Description

La présente invention se rapporte à un procédé de réalisation d'un composite actif constitué d'un support comprimé et d'un agent actif. Le support comprimé constitue un support poreux qui est chimiquement inerte et thermiquement bon conducteur, de façon à permettre des interactions complètes et rapides entre l'agent actif, dispersé dans le support, et un flux gazeux.

Dans certains domaines comme par exemple celui des pompes à chaleur chimiques basées sur la thermicité de la réaction entre un solide et un gaz, ou de l'adsorption d'un gaz sur un solide, on utilise un mélange d'un matériau divisé, tel que le graphite expansé, et d'un réactif solide, par exemple un sel, ou respectivement d'un adsorbant comme une zéolithe. Le mélange de graphite expansé et de ce solide, siège d'une réaction chimique ou d'une adsorption physique, présente de nombreux avantages lors d'une réaction chimique ou d'une adsorption physique entre le solide et un gaz. Le graphite expansé se présentant sous forme de feuillets a une très grande surface spécifique et permet la diffusion du gaz même en milieu confiné. De plus, la conductibilité thermique du mélange est importante.

Dans le document WO-A-9115292, il a été proposé de réaliser un composite actif en préparant un support formé d'un bloc de graphite expansé recomprimé qui est ensuite imprégné de l'extérieur, par exemple, par une solution d'un sel, le support imprégné étant ensuite séché pour réaliser le composite actif. Le composite actif ainsi réalisé a une conductibilité thermique nettement supérieure à celle du graphite expansé en feuillets, tout en gardant une porosité importante aux flux gazeux.

Malgré des avantages indéniables, le composite actif préparé selon le procédé décrit dans le document WO-A-9115292 ne donne pas entièrement satisfaction. En effet, d'une part, la mise en oeuvre de ce procédé est longue et s'adapte difficilement à une fabrication à grande échelle et, d'autre part, il est difficile d'obtenir une répartition homogène de l'agent actif au sein du support. De plus, le fait d'imprégner le bloc de graphite expansé recomprimé par l'extérieur rend fragile la paroi extérieure du bloc.

La présente invention a donc pour objet un procédé de réalisation d'un composite actif permettant une fabrication à grande échelle et dans lequel l'homogénéité de la répartition de l'agent actif dans le support est améliorée.

La présente invention a également pour objet un tel procédé qui permet de réaliser un composite actif ayant des parois externes plus résistantes.

Pour ce faire, l'invention propose un procédé de réalisation d'un composite actif comportant les étapes de :
- formation d'au moins deux supports poreux par la recompression d'un produit pulvérulent expansé,
- formation d'au moins une cavité s'étendant dans chaque support poreux,
- formation d'un ensemble avec les supports, les cavités de chaque support se retrovant à l'intérieur de l'ensemble,
- répartition dans la masse des supports poreux d'un agent actif à partir des cavités.

L'invention propose également un composite actif constitué d'un support comprimé et d'un agent actif vis-à-vis d'un gaz, réalisé à partir de ce procédé.

Un tel composite actif est destiné à être utilisé pour mettre en oeuvre soit une réaction de type solide-gaz, soit une adsorption entre un gaz et un solide, soit l'absorption d'un gaz dans une solution saturée ou non d'un solide, soit une réaction entre un gaz et un liquide catalysée par un solide, soit enfin la réaction de transformation d'un gaz catalysée par un solide. Ainsi, la présente invention propose un procédé de mise en oeuvre soit de réactions du type gaz-solide, soit d'adsorption gaz-solide, soit d'absorption d'un gaz dans une solution saturée ou non d'un solide, soit enfin de transformation catalytique d'un gaz en utilisant comme milieu réactionnel un bloc de graphite expansé, puis recomprimé à partir du procédé.

D'autres caractéristiques et avantages de la présente invention apparaîtront plus clairement à la lecture de la description suivante, faite en référence aux dessins annexés sur lesquels :
- la figure 1 est une vue schématique en perspective d'un composite actif en forme de bloc, selon un premier mode de réalisation de l'invention ;
- la figure 2 est une vue en plan prise dans le sens de la flèche -2- de la figure 1 ;
- la figure 3 est une vue en section d'une chambre contenant un composite actif ;
- la figure 4 est une vue en plan d'un composite actif en forme d'élément d'ensemble, selon un deuxième mode de réalisation ;
- les figures 4A et 4B sont chacune une vue schématique en perspective du composite actif de la figure 4 ;
- la figure 5 est une section pris selon la ligne 5-5 de la figure 4 ;
- la figure 6 est une section d'un ensemble d'une série d'éléments selon la figure 5 ;
- la figure 7 est une vue en plan d'un composite actif en forme d'élément d'ensemble selon un troisième mode de réalisation ;
- la figure 8 est une vue en plan d'un élément d'ensemble selon un quatrième mode de réalisation ; et
- les figures 9, 10 et 11 sont chacune une vue en plan d'éléments d'ensemble selon un autre mode de réalisation.

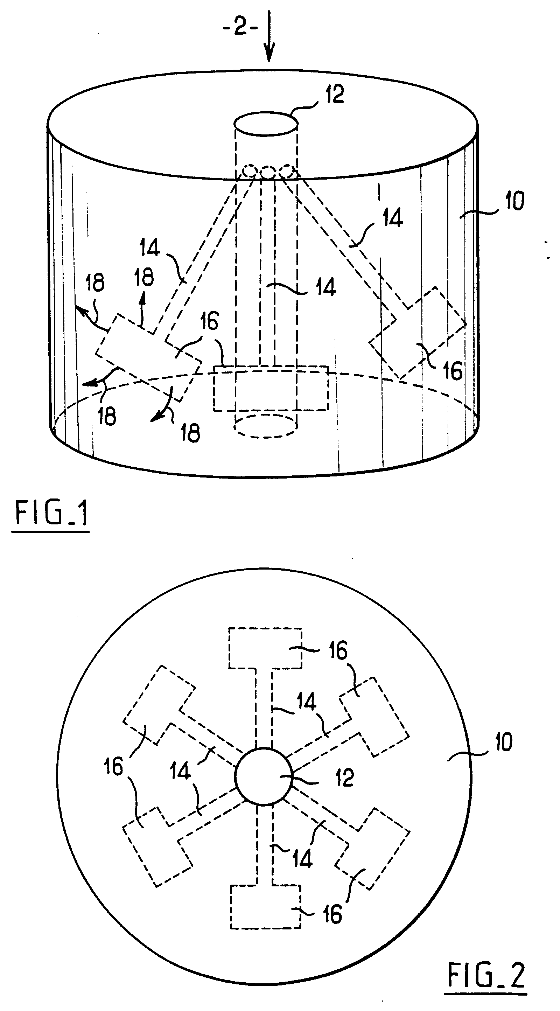

Sur la figure 1 est représenté un support comprimé 10 qui, dans l'exemple illustré, a une forme cylindrique. Le support comprimé 10 est formé d'un graphite expansé, de densité initiale comprise entre 0,001 et 0,02, qui est recomprimé afin d'obtenir un support de forme stable ayant une densité entre 0,02 et 1,5. Un passage axial 12 s'étend à travers le support 10. Afin de permettre l'imprégnation de support 10 au moyen d'un agent actif, par exemple un sel, une série de passages radiaux 14, sensiblement similaires, sont formés dans le support comprimé 10. Comme on le voit sur la figure 2, les passages radiaux 14, au nombre de six dans l'exemple illustré, s'étendent de manière symétrique dans le support comprimé 10.

A l'extrémité de chaque passage 14 éloignée du passage axial 12 est formée une galerie 16. Chaque galerie est remplie de sel sous forme pulvérulente. Il est possible d'utiliser le support actif ainsi réalisé pour mettre en oeuvre des réactions solide-gaz. De manière alternative, afin de faire pénétrer le sel dans le support comprimé, de la vapeur d'eau sous pression est envoyée par une extrémité du passage axial 12, l'autre extrémité ayant été préalablement obturée. La vapeur d'eau, en passant des galeries 16 vers l'extérieur du support comprimé 10, fait pénétrer le sel dans les interstices du support comprimé comme le représentent les flèches 18 sur la figure 1. La disposition symétrique des passages 14 et des galeries 16 assure une diffusion généralement uniforme du sel dans le support comprimé. Après l'arrêt de la vapeur d'eau, le support comprimé est chauffé afin de le sécher.

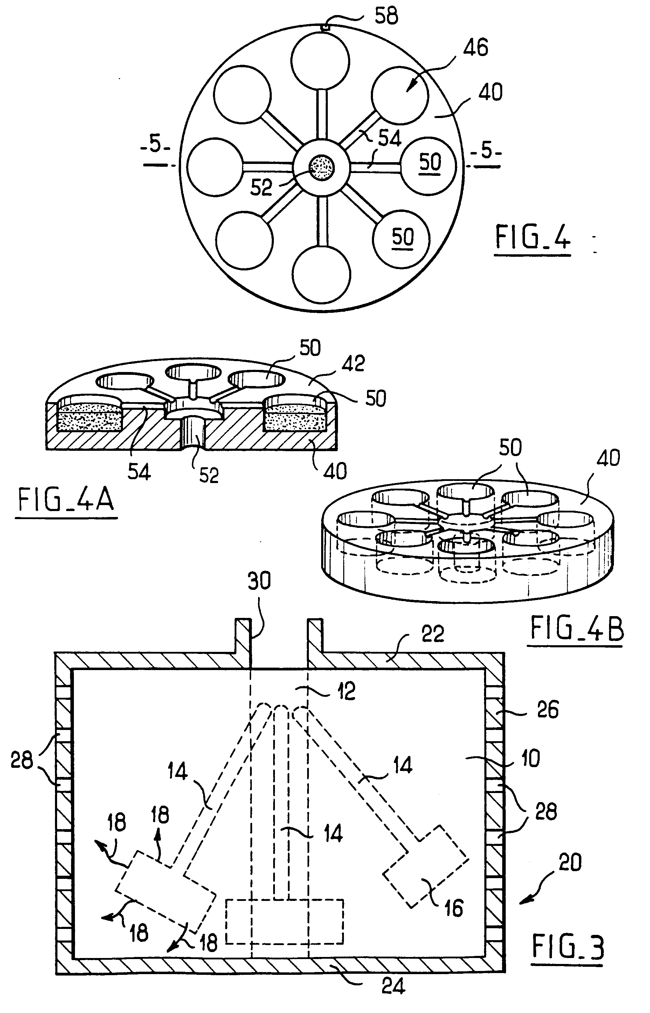

Dans un mode de réalisation alternatif, au lieu de remplir les galeries 16 de sel pulvérulent, une solution de sel sous pression est injectée par le passage axial 12. Afin de résister à la pression interne générée par la solution sous pression, le support comprimé est enfermé dans une chambre 20 comme représenté sur la figure 3. La chambre 20 comprend deux extrémités 22, 24 fermées de forme sensiblement circulaire reliées par une paroi annulaire 26 munie d'orifices 28 permettant la sortie de la solution sous pression. L'extrémité 22 de la chambre 20 comporte une entrée 30 communiquant avec le passage axial 12 du support comprimé 10. Le support comprimé, imprégné de sel, forme un composite actif.

L'utilisation d'un support comprimé 10 comme celui décrit ci-avant permet d'assurer une bonne répartition du sel au sein du support comprimé. Les modes de réalisation de l'invention décrits ci-après facilitent également la préparation de composite actif à grande échelle.

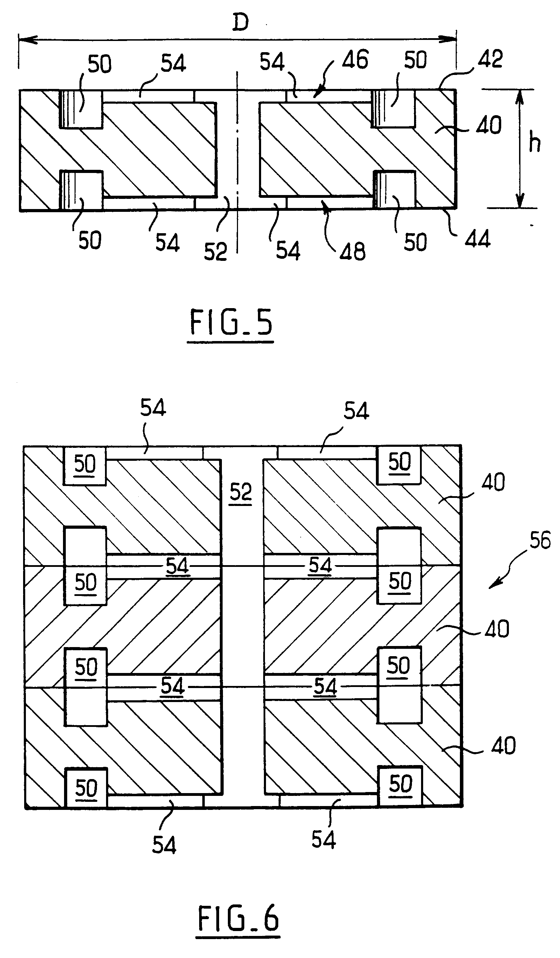

Le support comprimé 10 décrit plus haut a une hauteur du même ordre de grandeur que son diamètre. Sur les figures 4 et 5 est représenté un support comprimé 40, dont la hauteur h est nettement inférieure au diamètre D. Comme représenté sur les figures 4 et 5, le support comprimé 40 comporte des cavités 46 et 48 sur ses deux surfaces planes 42 et 44. Dans l'exemple illustré, les cavités 46, 48 sont similaires, symétriques et constituées chacune de six logements partiels 50 reliés à un passage axial 52 par des conduits 54.

Un mode de réalisation alternatif du support comprimé 40 est représenté sur la figure 4A. Dans cet exemple, les cavités 50 sont disposées uniquement sur une surface 42 du support comprimé 40. Comme représenté sur la figure 4B, les cavités 50 peuvent, dans un autre mode de réalisation, s'étendre à travers le support comprimé 40 de façon à former des passages continus dans un ensemble de supports comprimés tel que celui représenté sur la figure 6.

Dans un mode de réalisation préféré, la recompression du graphite expansé s'effectue dans un ensemble piston-cylindre, dans lequel la face inférieure du piston ainsi que le fond du cylindre comportent des saillies afin de créer les cavités 46 et 48 lors de la recompression du support comprimé. Le passage axial 52 est avantageusement percé par la suite.

Sur la figure 6 est représenté un ensemble 56 de supports comprimés 40 disposés les uns sur les autres de manière que les logements partiels 50 soient alignés afin de former des cavités. De préférence, chaque support 40 comporte une encoche 58 pour permettre le bon alignement des supports 40 les uns par rapport aux autres. Dans l'exemple illustré, l'ensemble 56 comporte trois supports comprimés 40. Cependant, l'ensemble 56 peut comporter tout nombre supérieur à deux.

L'introduction de l'agent actif dans l'ensemble 56 de supports comprimés 40 afin de former un composite actif peut être réalisée de diverses manières.

Selon un premier mode de réalisation, des logements partiels 50 sur la surface supérieure de chaque support comprimé 40 sont remplis préalablement d'un agent actif, par exemple un sel sous la forme de poudre fine. Des supports comprimés 40 sont ensuite superposés les uns sur les autres afin de former un ensemble 56 tel que représenté sur la figure 6. De la vapeur d'eau sous pression est envoyée par le passage axial 52, qui est en communication avec les conduits 54, provoquant ainsi la diffusion du sel dans le matériau des supports comprimés 40. L'ensemble 56 des supports 40 est enfin séché.

Cependant, ce moyen de diffusion sous l'effet de la vapeur d'eau n'est pas utilisable avec tout sel, compte tenu de leur très faible tension de vapeur.

Selon un deuxième mode de réalisation, l'introduction de l'agent actif dans l'ensemble 56 des supports comprimés 40 consiste à injecter une solution de sel par une extrémité du passage axial 52, l'autre étant préalablement fermée. Afin que l'ensemble 56 résiste à la pression interne générée par la solution, il convient de l'enfermer dans une chambre analogue à celle 20 de la figure 3. L'ensemble 56 des supports comprimés 40 est ensuite séché comme dans l'ensemble précédent.

L'intérieur de la chambre 20 peut avantageusement être sous vide afin de faciliter l'imprégnation de l'ensemble.

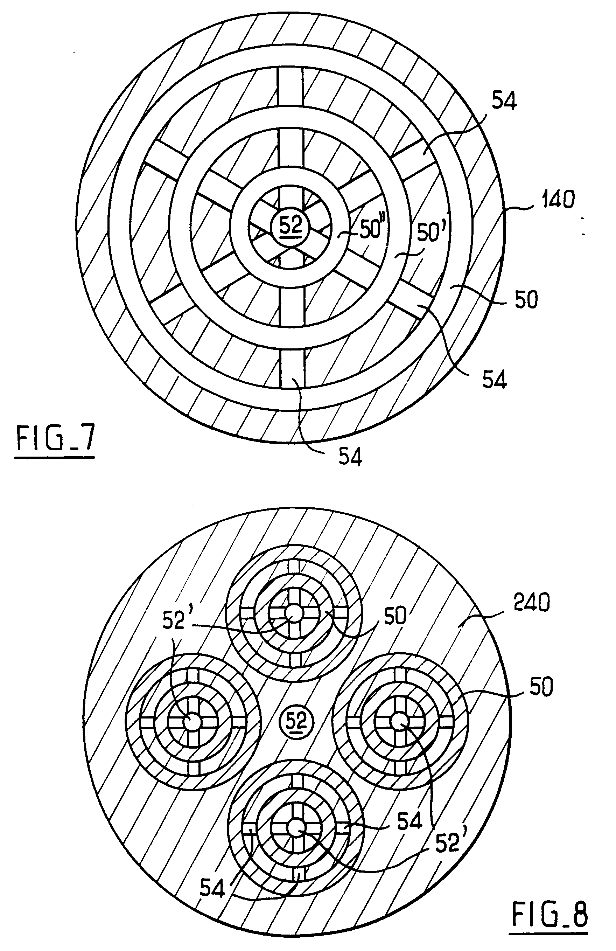

Selon un troisième mode de réalisation de l'imprégnation, le passage axial 52, ainsi que les conduits 54 et les cavités 50 sont remplis de solution d'un sel à la pression ambiante, l'ensemble 56 étant renfermé dans une chambre 20. Ensuite, la chambre 20 et l'ensemble 56 sont mis en rotation autour de l'axe longitudinal du passage axial 52. Sous l'action de la rotation, la solution est soumise à une force centrifuge qui provoque la diffusion de la solution dans le matériau de l'ensemble 56 à partir des cavités 50. Afin d'assurer une meilleure diffusion de la solution chaque support comprimé 140 peut comprendre plusieurs logements circulaires coaxiaux 50, 50', 50'' tel que représentés sur la figure 7. La section des logements 50, 50', 50'' peut varier d'un logement à l'autre.

Selon un autre mode de réalisation, le sel est mélangé préalablement avec un solide dispersant sublimable avant son introduction dans les cavités 50 de l'ensemble 56. Le solide dispersant sublimable passe d'une phase solide à une phase gazeuse sous l'effet de la chaleur. Cette sublimation entraîne la diffusion du sel, se présentant sous forme de poudre fine, dans le matériau de l'ensemble 56. Le graphite expansé recomprimé étant très bon conducteur thermique, il est possible de chauffer l'ensemble 56 des supports 40 par l'extérieur afin de provoquer la sublimation du dispersant. De façon alternative, on peut envoyer de l'air chaud par le passage axial 52 et les conduits 54 afin d'assurer la sublimation du solide dispersant.

On peut également faire fondre l'agent actif disposé dans les cavités en chauffant le support comprimé, ou l'ensemble de supports comprimés, par l'extérieur. L'agent fondu pénètre dans le matériau du support comprimé et le refroidissement du support comprimé entraîne la thermocristallisation de l'agent actif.

Sur la figure 8 est représenté un mode de réalisation alternatif d'un support comprimé 240 destiné à former un élément d'un ensemble 56. Ce support 240 comporte un passage axial 52 ainsi que d'autres passages longitudinaux 52', quatre dans l'exemple illustré, chacun communiquant avec des logements circulaires coaxiaux 50 par des conduits 54.

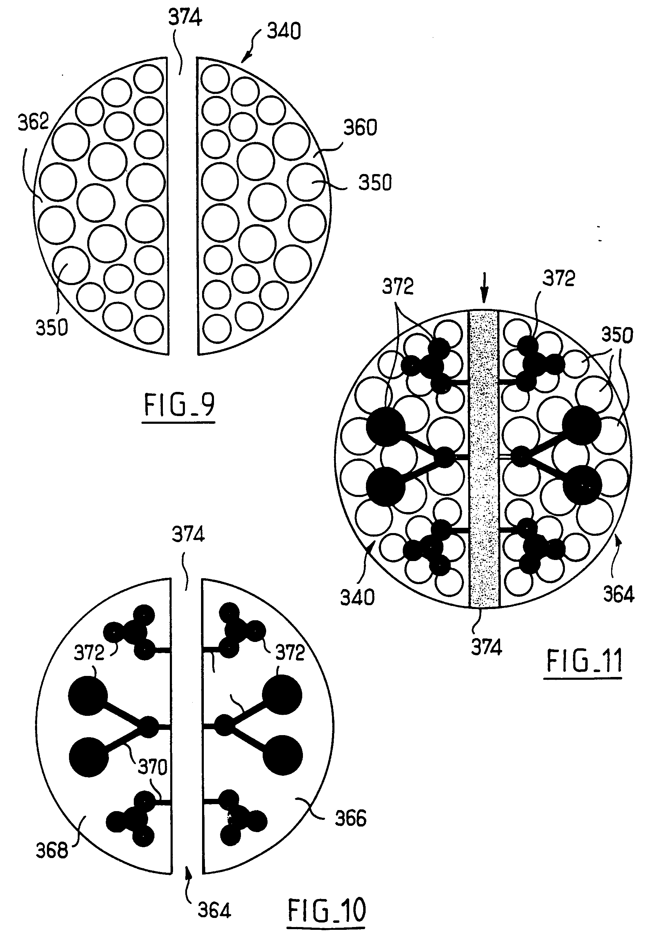

Sur les figures 9, 10 et 11 est représenté un mode de réalisation dans lequel les cavités destinés à contenir l'agent actif, ainsi que les conduits, sont disposés dans des supports comprimés différents.

Comme représenté sur la figure 9, le support comprimé 340 est formé de deux parties 360 et 362 ayant chacune une section généralement semi-circulaire, et munies chacune de nombreuses cavités 350. Dans l'exemple illustré, chaque cavité 350 a une section généralement circulaire. Sur la figure 10 est représenté un support comprimé 364, formé comme celui de la figure 9 de deux parties 366 et 368 généralement semi-circulaires, et munies de conduits 370 menant à des ouvertures 372. La superposition des supports comprimés 364 et 340 est représentée sur la figure 11 et l'on peut voir que les ouvertues 372 sont disposées chacune afin de pouvoir communiquer avec plusieurs cavités 350. Un ensemble de supports comprimés est formé de plusieurs paires de supports 340 et 364.

Dans ce mode de réalisation, les cavités 350 sont remplies d'agent actif avant la superposition des supports comprimés 340 et 364 et l'ensemble ainsi formé est utilisé pour mettre en oeuvre des réactions solide-gaz sans faire pénétrer outre mesure l'agent actif dans le matériau des supports comprimés. Cette technique peut s'appliquer aux modes de réalisation décrits ci-avant. De façon alternative, afin de réduire le nombre de cavités 350, on fait pénétrer l'agent actif dans le matériau des supports comprimés par l'un des moyens décrits ci-avant.

Dans le mode de réalisation des figures 9 à 11, le gaz de réaction est introduit par le passage 374 entre les deux parties 360 et 362, et 366 et 368 des supports comprimés.

Le procédé de réalisation d'un composite actif selon l'invention est utilisable avec de nombreux agnts actifs diférents tel que ceux proposés à titre d'exemple dans le tableau I. Par agent actif, on entend par exemple un solide réactif, un solide absorbant, un liquide absorbant saturé ou non, ou un solide agissant comme catalyseur.

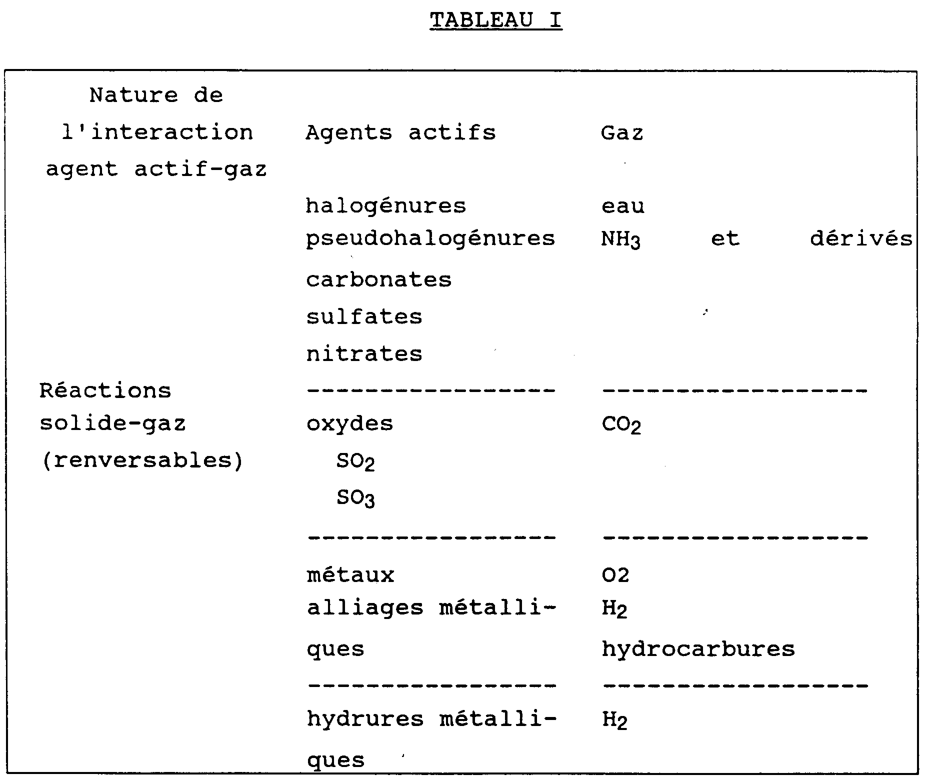

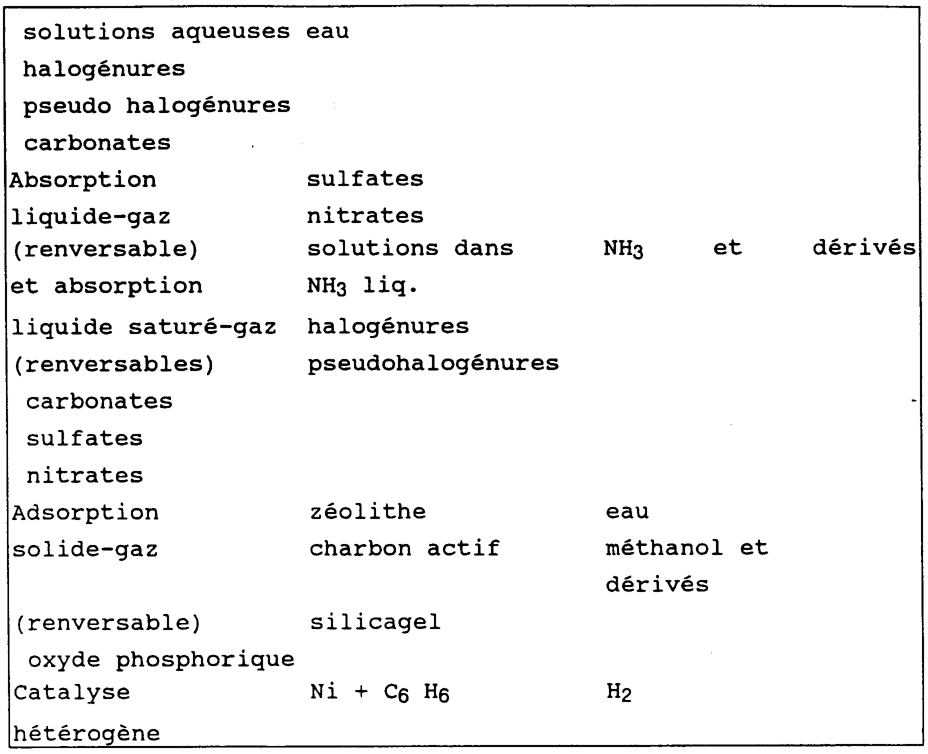

Dans le cas des chlorures, le tableau II précise la nature de liquides d'imprégnation solubilisant l'agent actif ou le mettant en suspension.

**TABLEAU II**

| Agent actif | Liquide d'imprégnation | | |
|---|---|---|---|
| | de solubilisation | de suspension | |
| CaCl₂ | eau ou alcool,acétone | | |
| MnCl₂ | alcool | éther,NH₃ | liquide |
| BaCl₂ | alcool | | |
| NiCl₂ | alcool,NH₄OH | NH₃ | liquide |
| CuCl₂ | acétone | | |
| CoCl₂ | alcool,acétone | | |
| | éther | | |
| SrCl₂ | alcool,acétone | NH₃ | liquide |
| NaCl | glycérine | | |
| FeCl₂ | alcool,acétone | éther | |
| NH₄Cl | alcool,NH₃ liquide | acétone,éther | |
| CdCl₂ | alcool | acétone,éther | |

D'autres réactions sont possibles entre des sels du Tableau II soit avec de la méthylamine soit avec de l'amoniac.

Le composite actif réalise selon le procédé objet de l'invention peut être utilisé en tout procédé de mise en oeuvre de processus physico-chimiques mettant en oeuvre un gaz et soit un solide réactif, soit un solide adsorbant, soit un liquide absorbant saturé ou non, soit un solide agissant comme catalyseur, soit enfin le siège d'une condensation/évaporation d'un gaz.

Le support comprimé du composite actif réalisé selon le présent procédé peut comprendre de 1 à 95 % en poids de graphite expansé recomprimé et de 99 à 5 % en poids d'agent actif.

Le procédé de réalisation d'un composite actif selon l'invention permet de disposer plus d'agent actif vers l'intérieur du composite et moins vers son extérieur. Ainsi, l'invention permet de réaliser un composite actif dont les parois externes sont plus solides.

## Revendications

1. Procédé de réalisation d'un composite actif comportant les étapes de
- formation d'au moins deux supports poreux par la recompression d'un produit pulvérulent expansé,
- formation d'au moins une cavité s'étendant dans chaque support poreux,
- formation d'un ensemble avec les supports, les cavités de chaque support se retrouvant à l'intérieur de l'ensemble,
- répartition dans la masse des supports poreux d'un agent actif à partir des cavités.

2. Procédé selon la revendication 1 caractérisé en ce que, afin de former la cavité, chaque support est formé avec un logement partiel, les supports étant disposés de telle sorte que deux logements partiels se correspondent et forment ensemble la cavité.

3. Procédé selon la revendication 1 ou 2 caractérisé en ce que l'on forme l'ensemble de supports a partir d'une série de supports poreux sensiblement analogues l'un à l'autre.

4. Procédé selon l'une des revendications 1 à 3 caractérisé en ce que l'introduction dans le support poreux de l'agent actif s'effectue en insérant l'agent actif dans la cavité et en dispersant l'agent actif dans le support par injection de vapeur d'eau dans la cavité.

5. Procédé selon l'une des revendications 1 à 3 caractérisé en ce qu'afin d'introduire l'agent actif dans le support poreux, on prépare une solution de l'agent actif et on injecte ensuite cette solution dans la cavité, le procédé comportant en plus une étape de séchage du support poreux imprégné.

6. Procédé selon l'une des revendications 1 à 3 caractérisé en ce qu'afin d'introduire l'agent actif dans le support poreux, on prépare une solution de l'agent actif qui est insérée dans la cavité, et l'on réalise en outre les étapes de mise en rotation du support poreux afin de faire pénétrer la solution dans le support poreux, et le séchage du support poreux imprégné.

7. Procédé selon l'une des revendications 1 à 3 caractérisé en ce qu'afin d'introduire l'agent actif dans le support poreux, on insère dans la cavité un mélange d'un agent actif et d'un dispersant sublimable, le dispersant étant destiné à faire pénétrer l'agent actif dans le support poreux sous l'effet de la chaleur.

8. Composite actif constitué d'un support comprimé et d'un agent actif vis-à-vis d'un gaz réalisé selon le procédé d'une des revendications 1 à 7.

9. Composite actif selon la revendication 8 caractérisé en ce que le support comprimé comprend du graphite expansé recomprimé ayant une densité comprise entre 0,02 et 1,5 et en ce qu'il comprend de 1 à 95 % en poids de graphite expansé recomprimé et de 99 à 5 % en poids d'agent actif.

## Claims

1. Method for production of an active compound comprising the steps of:
- formation of at least two porous supports by recompression of an expanded powdered product;
- formation of at least one cavity which extends in each porous support;
- formation of an assembly with the supports, the cavities of each support being disposed inside the assembly; and
- distribution in the mass of the porous supports of an active agent, from the cavities.

2. Method according to claim 1, characterised in that in order to form the cavity, each support is formed with a partial recess, the supports being disposed such that two partial recesses correspond and together form the cavity.

3. Method according to claim 1 or 2, characterised in that the assembly of supports is formed from a series of porous supports which are substantially the same as one another.

4. Method according to one of claims 1 to 3, characterised in that the active agent is introduced in the porous support by inserting the active agent in the cavity and dispersing the active agent in the support by injection of steam in the cavity.

5. Method according to one of claims 1 to 3, characterised in that in order to introduce the active agent in the porous support, a solution of the active agent is prepared and this solution is then injected in the cavity, the method additionally comprising a step of drying the impregnated porous support.

6. Method according to one of claims 1 to 3, characterised in that in order to introduce the active agent in the porous support, a solution of the active agent is prepared and inserted in the cavity, and additionally the steps are performed of spinning of the porous support in order to make the solution penetrate in the porous support, and drying of the impregnated porous support.

7. Method according to one of claims 1 to 3, characterised in that in order to introduce the active agent in the porous support, there is introduced in the cavity a mixture of an active agent and a sublimable dispersant, the dispersant being intended to make the active agent penetrate in the porous support under the effect of heat.

8. Active compound consisting of a compressed support and an agent which is active in relation to a gas produced according to the method of one of claims 1 to 7.

9. Active compound according to claim 8, characterised in that the compressed support comprises recompressed expanded graphite with a density of between 0.02 and 1.5, and comprises 1 to 95% by weight of recompressed expanded graphite and 99 to 5% by weight of expanded agent.

## Patentansprüche

1. Verfahren zur Herstellung eines aktiven Composites, welches folgende Schritte aufweist:
- Bildung von wenigstens zwei porösen Trägern durch Wiederverdichtung eines geschäumten Pulverproduktes,
- Bildung wenigstens eines Hohlraums, der sich in jedem porösen Träger erstreckt,
- Bildung einer Anordnung mit den Trägern, wobei sich die Hohlräume jedes Trägers im Inneren der Anordnung befinden,
- Verteilung eines aktiven Agens in der Masse der porösen Träger von den Hohlräumen aus.

2. Verfahren nach Anspruch 1, dadurch gekennzeichnet, daß jeder Träger zur Bildung des Hohlraumes mit einem Teilraum ausgebildet ist, wobei die Träger so angeordnet sind, daß sich zwei Teilräume entsprechen und zusammen den Hohlraum bilden.

3. Verfahren nach Anspruch 1 oder 2, dadurch gekennzeichnet, daß die Anordnung der Träger ausgehend von einer Reihe von porösen Trägern gebildet wird, die im wesentlichen analog zueinander sind.

4. Verfahren nach einem der Ansprüche 1 bis 3, dadurch gekennzeichnet, daß das Einführen des aktiven Agens in den porösen Träger dadurch erfolgt, daß das aktive Agens in den Hohlraum eingeführt wird und daß das aktive Agens in den Träger durch Einspritzen von Wasserdampf in den Hohlraum dispergiert wird.

5. Verfahren nach einem der Ansprüche 1 bis 3, dadurch gekennzeichnet, daß zum Einführen des aktiven Agens in den porösen Träger eine Lösung aus dem aktiven Agens hergestellt wird und diese Lösung anschließend in den Hohlraum gespritzt wird, wobei das Verfahren außerdem einen Schritt der Trocknung des imprägnierten porösen Trägers aufweist.

6. Verfahren nach einem der Ansprüche 1 bis 3, dadurch gekennzeichnet, daß zur Einführung des aktiven Agens in den porösen Träger eine Lösung aus dem aktiven Agens hergestellt wird, die in den Hohlraum eingeführt wird, und daß außerdem die Schritte des In-Drehung-Versetzens des porösen Trägers, um das Eindringen der Lösung in den porösen Träger zu bewirken, und des Trocknens des imprägnierten porösen Trägers durchgeführt werden.

7. Verfahren nach einem der Ansprüche 1 bis 3, dadurch gekennzeichnet, daß zum Einführen des aktiven Agens in den porösen Träger eine Mischung aus einem aktiven Agens und einem sublimierbaren Dispersionsmittel in den Hohlraum eingeführt wird, wobei das Dispersionsmittel dazu dient, das aktive Agens durch Wärmewirkung in den porösen Träger eindringen zu lassen.

8. Aktives Composite, gebildet aus einem verdichteten Träger und aus einem einem Gas gegenüber aktiven Agens, hergestellt nach dem Verfahren eines der Ansprüche 1 bis 7.

9. Aktives Composite nach Anspruch 8, dadurch gekennzeichnet, daß der verdichtete Träger geschäumten, wieder verdichteten Graphit mit einer Dichte zwischen 0,02 und 1,5 aufweist und daß es 1 bis 95 Gewichtsprozent geschäumten, wieder verdichteten Graphit und 99 bis 5 Gewichtsprozent aktives Agens aufweist.
